(19) Europäisches Patentamt
European Patent Office
Office européen des brevets

(11) Numéro de publication : **0 371 839 B1**

# (12) FASCICULE DE BREVET EUROPEEN

(45) Date de publication du fascicule du brevet : **01.04.92 Bulletin 92/14**

(51) Int. Cl.$^5$ : **G01N 1/30,** G01N 33/52

(21) Numéro de dépôt : **89403044.4**

(22) Date de dépôt : **06.11.89**

## (54) Procédé de coloration différentielle des cellules de la peau et de leurs noyaux.

(30) Priorité : **30.11.88 FR 8815684**

(43) Date de publication de la demande : **06.06.90 Bulletin 90/23**

(45) Mention de la délivrance du brevet : **01.04.92 Bulletin 92/14**

(84) Etats contractants désignés : **BE CH DE GB LI NL SE**

(56) Documents cités :
**GB-A- 1 245 742**
**CHEMICAL ABSTRACTS, vol. 90, no. 19, 7 mai 1979, page 262, colonne 1, abrégé no. 148039y, Columbus, Ohio, US; A. GIORGIO et al.: "A new method for cytological staining", & QUAD. SCLAVO DIAGN. CLIN.LAB. 1978, 14(2), 284-8**

(56) Documents cités :
**CHEMICAL ABSTRACTS, vol. 108, no. 3, 18 janvier 1988, page 301, colonne 1, abrégé no. 18665d, Columbus, Ohio, US; M. LEVAME et al.: "Herovici picropolychrome. Application to the identification of collagen types I and III", & PATHOL. BIOL. 1987, 35(8), 1183-8**

(73) Titulaire : **L'OREAL**
**14, Rue Royale**
**F-75008 Paris (FR)**

(72) Inventeur : **Saint-Leger, Didier**
**140, Boulevard Péreire**
**F-75017 Paris (FR)**
Inventeur : **Francois, Anne-Marie**
**63, Avenue de L'Etang**
**F-77183 Croissy-Beaubourg (FR)**
Inventeur : **Leveque, Jean-Luc**
**4, Allée des Sapins**
**F-93340 Le Raincy (FR)**

(74) Mandataire : **Michardière, Bernard et al**
**C/O CABINET PEUSCET 68, rue d'Hauteville**
**F-75010 Paris (FR)**

EP 0 371 839 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de coloration différentielle des cellules de la peau et de leurs noyaux, particulièrement avantageux lorsque la cellule est fixée sur un support adhésif.

Il est connu d'utiliser pour le prélèvement de cellules, en particulier pour le prélèvement de cellules de la peau, des supports adhésifs. De nombreux supports adhésifs sont commercialisés. On peut par exemple citer ceux vendus sous les dénominations commerciales "D'SQUAME" par la Société CUTECH, "TESA FILM" par la Société BEIERSDORF et "SCOTCH" par la Société 3 M. Ces supports adhésifs sont généralement sous forme de rubans ou de bandes, transparents ou translucides.

Si on désire observer les cellules prélevées sur ces supports, il est nécessaire de procéder à une coloration desdites cellules ; cette coloration doit être différente de celle des noyaux, si l'on veut distinguer les noyaux dans les cellules, soit que leur couleur soit différente, soit que l'intensité de la coloration soit différente. Le problème est alors de trouver un procédé de coloration différentielle des cellules et des noyaux qui n'interfère pas avec le support, soit en le détruisant, soit en le colorant.

Des essais ont été faits avec de nombreux colorants acceptables pour la coloration cellulaire ou nucléaire tels que ceux cités, par exemple, dans "Histochimie normale et pathologique" par GANTER et GILLES, 1969, GAUTHIER VILLARDS éditeurs, et il n'a jamais été possible de mettre en évidence les noyaux car les colorants interfèrent avec le support adhésif. Selon la présente invention on a trouvé un procédé de coloration différentielle de la cellule et du noyau qui n'interfère pas avec le support adhésif et ne le colore pas.

La présente invention concerne un procédé de coloration différentielle de cellules de la peau et de leurs noyaux, les cellules étant fixées sur un support adhésif transparent ou translucide, caractérisé par le fait que l'on immerge successivement le support adhésif portant les cellules dans deux bains :

– en premier lieu, un bain A contenant en poids :

– 0,1 à 10 % d'au moins un colorant répondant à la formule générale I :

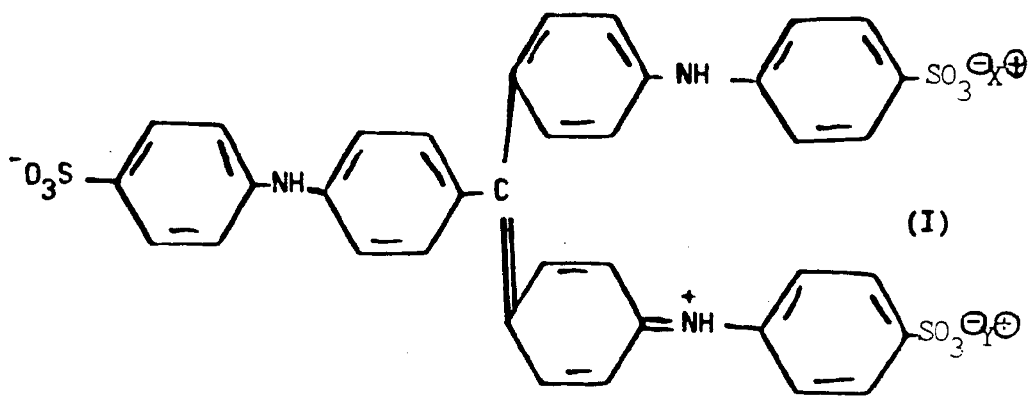

(I)

où X⊕ et Y⊕ sont des cations d'origine minérale ou organique, de préférence sodium,

– 10 à 80 % d'au moins un alcool miscible à l'eau,

– 20 à 95 % d'eau,

le bain ayant été amené à un pH basique compris entre 7,5 et 13,5 par addition d'une base minérale ou organique, par exemple de la soude ou de la potasse,

– en second lieu, un bain B contenant en poids :

– 0,01 à 10 % d'au moins un colorant de formule I définie ci-dessus ou encore de bleu de méthylène,

– 0,2 à 10 % d'au moins un colorant de formule II :

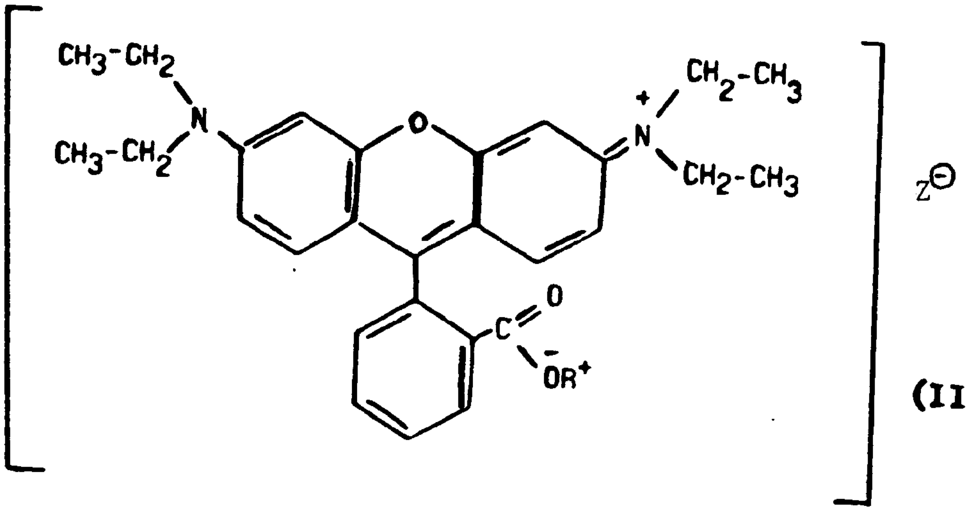

(II)

où $Z^-$ est un anion minéral ou organique,
R est l'hydrogène ou un cation minéral ou organique,
- 5 à 40 % d'un solvant miscible à l'eau,
- 5 à 50 % d'eau,
le bain ayant été amené à un pH acide compris entre 2 et 6,5.

On obtient ainsi, après coloration, un support adhésif intact qui n'a pas été coloré et où les cellules sont colorées en rose mauve pâle, les noyaux ayant sensiblement la même teinte plus foncée.

Selon l'invention, l'utilisation successive dans l'ordre des deux bains est nécessaire. En effet l'utilisation des deux bains dans un ordre différent, c'est-à-dire le bain B puis le bain A, ou l'utilisation d'un seul bain A ou B aboutit, soit à une absence de coloration cellulaire, soit à une absence de révélation des noyaux.

Dans le bain A et/ou B le colorant de formule I utilisé est, de préférence, le bleu de méthyle correspondant à la formule I dans laquelle $X^+$ et $Y^+$ sont $Na^+$.

Dans le bain A, l'alcool miscible à l'eau est avantageusement de l'éthanol, de l'isopropanol ou du méthanol, ce dernier étant préféré.

Le pH basique du bain A est obtenu par addition de soude ou de potasse en quantité telle que le pH final soit compris entre 7,5 et 13,5. Par exemple dans le cas d'un bain contenant 1 % de bleu de méthyle une concentration finale à 0,3 N de soude ou de potasse donne d'excellents résultats.

Dans le bain B, le colorant de formule II utilisé est, de préférence, la rhodamine B, correspondant à la formule II dans laquelle $Z^-$ est $Cl^-$ et R est H.

Dans le bain B, le solvant miscible à l'eau peut être, en particulier, un alcool miscible à l'eau ou un mélange d'alcools miscibles à l'eau, de préférence, un mélange de méthanol et d'éthanol en proportions quelconques.

La durée d'immersion du support adhésif dans le bain A est, de préférence, de 5 à 20 minutes, avantageusement voisine de 10 minutes. De même, la durée d'immersion dans le bain B est, de préférence, de 10 secondes à 10 minutes, avantageusement voisine de 2 minutes.

Après chaque bain le support adhésif est, de préférence, brièvement rincé à l'eau. Cette eau peut être de l'eau du robinet ou de l'eau distillée. Le support est ensuite séché par tout moyen convenable, tel que sèche-cheveux ou étuve.

Une fois séché, le support n'est pas abîmé et peut encore être collé par son propre adhésif sur tout matériau apte à l'examen microscopique, connu de l'homme de l'art.

Selon une variante préférée de l'invention, les bains A et B peuvent contenir de 0,01 à 1 % d'anti-oxydant tel que par exemple le butyl hydroxy toluène ou le butyl hydroxy anisole etc ...

Le procédé de coloration selon l'invention peut, plus particulièrement, être utilisé dans un procédé de diagnostic des états inflammatoires de la peau. En effet, il est connu que, dans le cas des peaux à l'état normal, donc non pathologique, les cellules cutanées de surface ou cornéocytes, sont des cellules totalement kératinisées qui sont dépourvues de noyau. Dans le cas où il y a inflammation de la peau, quelle qu'en soit la cause, l'accélération du renouvellement cellulaire épidermique a pour conséquence de délivrer à la surface de l'épiderme des cellules immatures qui possèdent encore un noyau. Le pourcentage de cellules nucléées, dites également parakératotiques, à la surface de la peau est donc un excellent indice de la sévérité de l'état inflammatoire. Par exemple un pourcentage de cellules nucléées de :

– moins de 10 %, indique une inflammation légère,
– de 10 à 30 %, indique une inflammation modérée,
– de 30 à 60 %, indique une inflammation importante et
– de plus de 60 %, indique une inflammation sévère.

Par conséquent, pour effectuer le diagnostic on prélève par "stripping" à l'aide d'un support adhésif les cellules cutanées de surface, et on effectue une coloration différentielle des cellules et des noyaux par le procédé de coloration selon la présente invention. On effectue ensuite l'analyse de l'image obtenue soit directement au microscope, soit par photographie et on détermine par comptage le pourcentage des cellules nucléées. On obtient ainsi une gradation quantitative de la sévérité de l'inflammation cutanée. Le diagnostic utilisant le procédé de coloration différentielle selon la présente invention est simple, rapide et non traumatisant pour le patient. Une telle mesure est notamment intéressante pour déterminer les érythèmes sur peau noire et dans les cas où l'inflammation est à l'état latent (pellicules du cuir chevelu). Un tel diagnostic permet de suivre de façon simple d'efficacité des traitements, notamment pour le psoriasis, les eczémas, les mycoses, l'acné, la dermatite séborrhéique, les pellicules, l'allergie de contact, ou l'érythème solaire, à l'aide d'agents anti-inflammatoires (par exemple, l'hydrocortisone et ses esters, la cortisone, la triamcinolone et ses dérivés, l'indométhacine, l'acide glycérrhétinique, l'aspirine, la dexaméthasone, la beta méthasone, la fluocinolone, la fluorométholone, le piroxicam, le diclofenac, le sulindac, l'acide niflumique, l'acide méfénamique, l'ibuprofène, le naproxène, le kétoprofène, la phénylbutazone, l'oxyphenbutazone et leurs dérivés).

EXEMPLE

On prélève à l'état d'un ruban adhésif, commercialisé sous la marque "SCOTCH" par la Société 3M, des cellules cutanées sur la joue d'un patient atteint de dermatite séborrhéique.

Après prélèvement, on trempe le ruban adhésif successivement :

– pendant 10 minutes, dans un bain A à pH = 7,8 contenant, en % en poids :
  – eau 70 %,
  – méthanol 29 %,
  – bleu de méthyle 1 %,
– pendant 2 minutes, dans un bain B à pH = 5,8 contenant, en % en poids :
  – méthanol 30 %,
  – éthanol 10 %,
  – bleu de méthyle 0,25 %,
  – rhodamine B 2,5 %,
  – eau q.s.p. 100 %.

Après les bains A et B, le ruban adhésif est rincé à l'eau distillée puis séché à l'aide d'un sèche-cheveux pendant 3 minutes.

On prend alors une photographie au microscope sur une zone du support adhésif ainsi préparé. On obtient une photographie dans laquelle les cellules sont colorées en rose mauve et les noyaux apparaissent dans la même teinte plus sombre. Par comptage, on établit que 80 à 90 % des cellules cutanées sont nucléées.

## Revendications

1. Procédé de coloration différentielle de cellules de la peau et de leurs noyaux, les cellules étant fixées sur un support adhésif transparent ou translucide, caractérisé par le fait que l'on immerge successivement le support adhésif portant les cellules dans deux bains :

– en premier lieu, un bain A contenant en poids :
  – 0,1 à 10 % d'au moins un colorant de formule générale I :

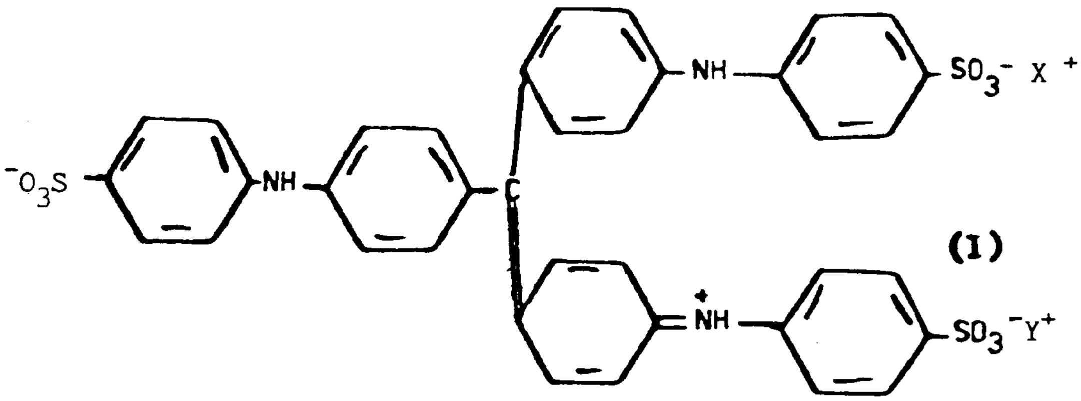

(I)

où $X^+$ et $Y^+$ sont des cations d'origine minérale ou organique, de préférence sodium,

– 10 à 80 % d'au moins un alcool miscible à l'eau,

– 20 à 95 % d'eau,

le bain ayant été amené à un pH basique compris entre 7,5 et 13,5 par addition d'une base minérale ou organique,

– en second lieu, un bain B contenant en poids :

– 0,01 à 10 % d'au moins un colorant de formule I définie ci-dessus ou encore de bleu de méthylène,

– 0,2 à 10 % d'au moins un colorant de formule II :

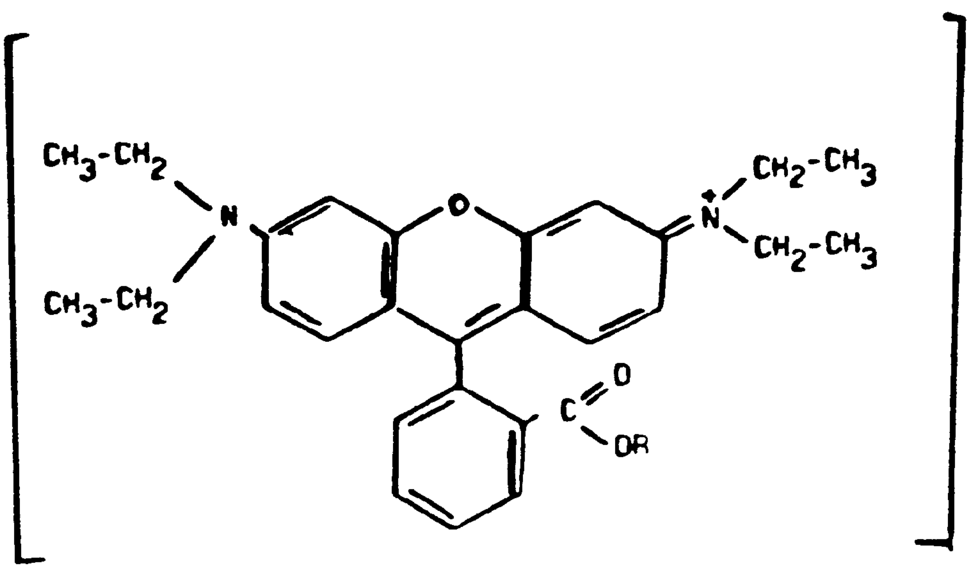

(II)

où $Z^-$ est un anion minéral ou organique,

R est l'hydrogène ou un cation minéral ou organique,

– 5 à 40 % d'un solvant miscible à l'eau,

– 5 à 50 % d'eau,

le bain ayant été amené à un pH acide compris entre 2 et 6,5.

2. Procédé de coloration selon la revendication 1, caractérisé par le fait que le colorant de formule 1 utilisé dans les bains A et/ou B correspond à la formule I dans laquelle $X^+$ et $Y^+$ sont $Na^+$.

3. Procédé de coloration selon les revendications 1 ou 2, caractérisé par le fait que, dans le bain A, l'alcool miscible à l'eau est de l'éthanol, de l'isopropanol ou du méthanol.

4 - Procédé de coloration selon l'une des revendications 1 à 3, caractérisé par le fait que le colorant de formule II utilisé dans le bain B correspond à la formule II dans laquelle $Z^-$ est $Cl^-$ et R est H.

5. Procédé de coloration selon l'une des revendications 1 à 4, caractérisé par le fait que dans le bain B le solvant miscible à l'eau est un alcool miscible à l'eau ou un mélange d'alcools miscibles à l'eau, de préférence un mélange de méthanol ou d'éthanol.

6 - Procédé de coloration selon l'une des revendications 1 à 5, caractérisé par le fait que la durée d'immersion dans le bain A est de 5 à 20 minutes, de préférence voisine de 10 minutes.

7 - Procédé de coloration selon l'une des revendications 1 à 6, caractérisé par le fait que la durée d'immersion dans le bain B est de 10 secondes à 10 minutes, de préférence voisine de 2 minutes.

8 - Procédé de coloration selon l'une des revendications 1 à 7, caractérisé par le fait qu'après chaque bain le support adhésif est rincé à l'eau puis séché.

9 - Procédé de coloration selon l'une des revendications 1 à 6 pour l'utilisation dans le diagnostic des états inflammatoires de la peau.

## Patentansprüche

1. Verfahren zur differentiellen Färbung von Hautzellen und deren Kernen, wobei die Zellen fixiert sind auf einem transparenten oder durchscheinenden Hafttträger, dadurch gekennzeichnet, daß man den Hafttträger, der die Zellen trägt, nacheinander in zwei Bädern immergiert, und zwar:

– zuerst in einem Bad A, welches enthält:

– 0,1 - 10 Gew.-% mindestens eines Farbstoffes der allgemeinen Formel I:

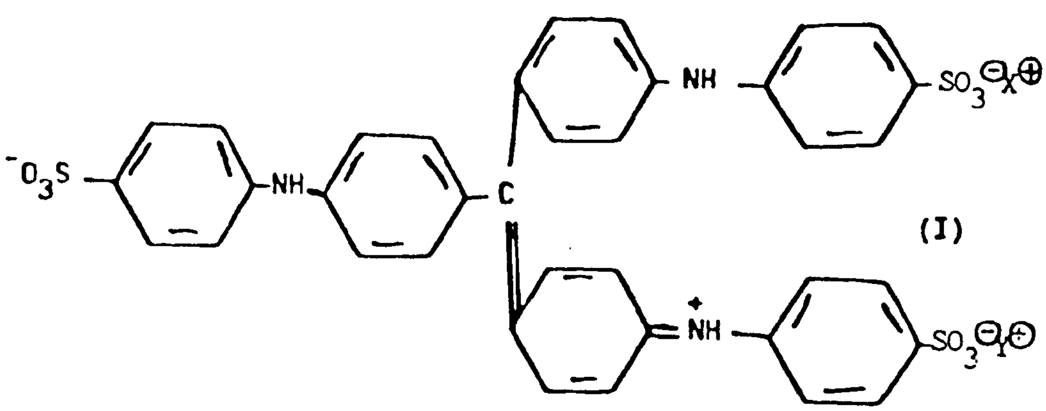

(I)

worin $X^+$ und $Y^+$ Kationen mineralischen oder organischen Ursprungs, vorzugsweise Natrium, sind,

– 10 - 80 Gew.-% mindestens eines mit Wasser mischbaren Alkohols,

– 20 - 95 Gew.-% Wasser,

wobei das Bad durch Zugabe einer mineralischen oder organischen Base auf einen basischen pH von 7,5 bis 13,5 gebracht wurde,

– zweitens in einem Bad B, welches enthält:

– 0,01 - 10 Gew,-% mindestens eines Farbstoffes der oben angegebenen Formel I oder Methylenblau,

– 0,2 - 10 Gew.-% mindestens eines Farbstoffes der Formel II

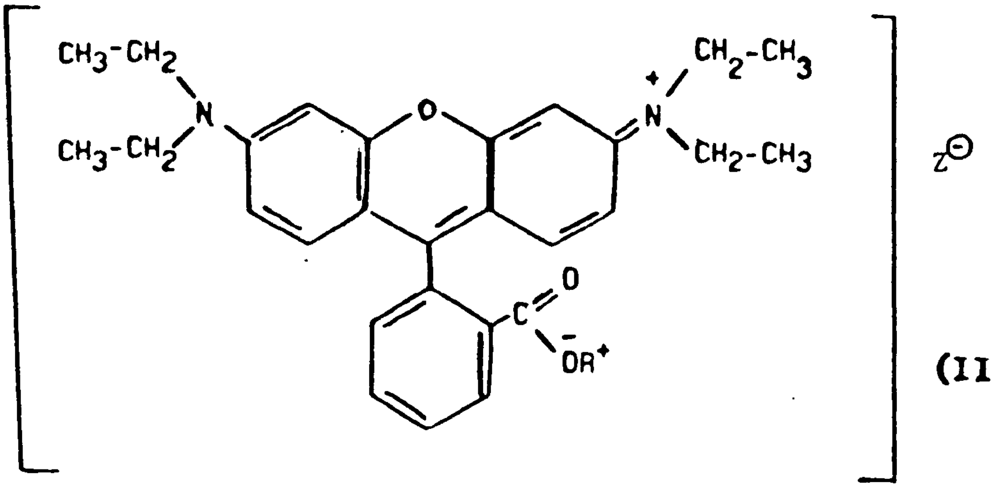

(II)

worin $Z^-$ für ein mineralisches oder organisches Anion steht,

R für ein Wasserstoffatom oder für ein mineralisches oder organisches Kation steht,

– 5 - 40 Gew.-% eines mit Wasser mischbaren Lösungsmittels,

– 5 - 50 Gew.-% Wasser,

wobei das Bad auf einen sauren pH von 2 bis 6,5 gebracht wurde.

2. Färbeverfahren nach Anspruch 1, dadurch gekennzeichnet, daß der in Bad A und /oder B verwendete Farbstoff der Formel I die Formel I aufweist, worin $X^+$ und $Y^+$ für $Na^+$ stehen.

3. Färbeverfahren nach Anspruch 1 oder 2, dadurch gekennzeichnet, daß in Bad A als mit Wasser mischbarer Alkohol Ethanol, Isopropanol oder Methanol verwendet wird.

4. Färbeverfahren nach einem der Ansprüche 1 bis 3, dadurch gekennzeichnet, daß der in Bad B verwendete Farbstoff der Formel II die Formel II aufweist, worin $Z^-$ für $Cl^-$ und R für H steht.

5. Färbeverfahren nach einem der Ansprüche 1 bis 4, dadurch gekennzeichnet, daß im Bad B als mit Wasser mischbares Lösungsmittel ein mit Wasser mischbarer Alkohol oder ein Gemisch aus mit Wasser mischbaren Alkoholen, vorzugsweise ein Methanol- oder Ethanolgemisch, verwendet wird.

6. Färbeverfahren nach einem der Ansprüche 1 bis 5, dadurch gekennzeichnet, daß die Dauer der Immersion in Bad A 5 - 20 min, vorzugsweise etwa 10 min, beträgt.

7. Färbeverfahren nach einem der Ansprüche 1 bis 6, dadurch gekennzeichnet, daß die Dauer der Immersion in Bad B 10 s bis 10 min, vorzugsweise etwa 2 min, beträgt.

8. Färbeverfahren nach einem der Ansprüche 1 bis 7, dadurch gekennzeichnet, daß der Haftträger nach jedem Bad mit Wasser gespült und anschließend getrocknet wird.

9. Färbeverfahren nach einem der Ansprüche 1 bis 8 zur Verwendung bei der Diagnose von inflammatorischen Zuständen der Haut.

**Claims**

1. Method for the differential staining of skin cells and their nuclei, the cells being attached to a transparent or translucent adhesive support, characterised in that the adhesive support carrying the cells is immersed successively in two baths:

– first, a bath A containing by weight:

– 0.1 to 10% of at least one stain of general formula I:

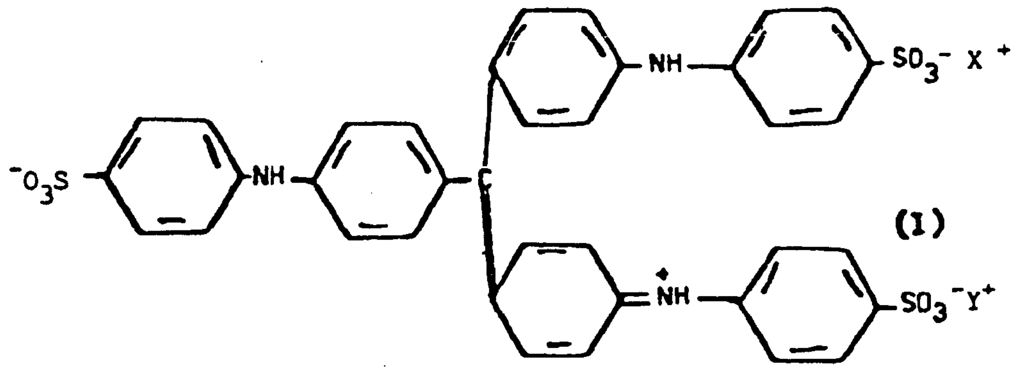

(I)

where $X^+$ and $Y^+$ are cations of inorganic or organic origin, preferably sodium,

– 10 to 80% of least one water-miscible alcohol, and

– 20 to 95% of water,

the bath having been taken to a basic pH of between 7.5 and 13.5 by adding an inorganic or organic base,

– secondly, a bath B containing by weight:

– 0.01 to 10% of at least one stain of formula I defined above, or alternatively of methylene blue,

– 0.2 to 10% of at least one stain of formula II:

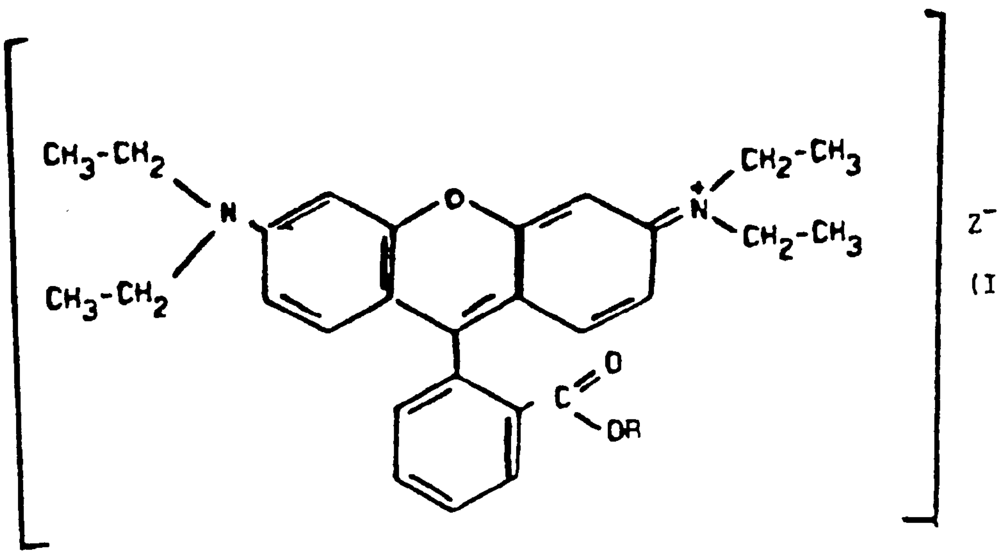

(II)

where $Z^-$ is an inorganic or organic anion,

R is hydrogen or an inorganic or organic cation,

– 5 to 40% of a water-miscible solvent, and

– 5 to 50% of water,

the bath having been taken to an acid pH of between 2 and 6.5.

2. Staining method according to Claim 1, characterised in that the stain of formula I used in the baths A and/or B corresponds to the formula I in which $X^+$ and $Y^+$ are $Na^+$.

3. Staining method according to Claim 1 or 2, characterised in that, in the bath A, the water-miscible alcohol is ethanol, isopropanol or methanol.

4. Staining method according to one of Claims 1 to 3, characterised in that the stain of formula II used in the bath B corresponds to the formula II in which $Z^-$ is $Cl^-$ and R is H.

5. Staining method according to one of Claims 1 to 4, characterised in that, in the bath B, the water-miscible solvent is a water-miscible alcohol or a mixture of water-miscible alcohols, preferably a mixture of methanol and ethanol.

6. Staining method according to one of Claims 1 to 5, characterised in that the period of immersion in the bath A is from 5 to 20 minutes, and preferably in the region of 10 minutes.

7. Staining method according to one of Claims 1 to 6, characterised in that the period of immersion in the bath B is from 10 seconds to 10 minutes, and preferably in the region of 2 minutes.

8. Staining method according to one of Claims 1 to 7, characterised in that, after each bath, the adhesive support is rinsed with water and then dried.

9. Staining method according to one of Claims 1 to 8, for use in the diagnosis of inflammatory conditions of the skin.